# EUROPEAN PATENT SPECIFICATION

(11) **EP 4 177 130 B1**
(45) Date of publication and mention of the grant of the patent: **01.04.2026**
(21) Application number: 21833923.2
(22) Date of filing: 02.07.2021
(51) Int. Cl.: B61L 23/04, B61L 15/00, B61K 9/08, G01B 11/25, G01B 21/30, G06T 7/593, B61L 25/02, E01B 35/00, G01B 11/245, G01B 21/04, G06T 7/00, G06T 7/73

(54) **ONBOARD RAIL INSPECTION PROCEDURE AND SYSTEM**
BORDSEITIGES INSPEKTIONSVERFAHREN UND SYSTEM FÜR SCHIENE
MÉTHODE ET SYSTÈME EMBARQUÉ D'INSPECTION DE VOIES

(30) Priority: 02.07.2020 ES 202030684
(43) Date of publication of application: 10.05.2023
(73) Proprietor: Virtualmechanics S.L., 41015 Sevilla (ES); Ferrocarril Metropolità de Barcelona, S. A., 41015 Sevilla (ES)
(72) Inventor: BRIALES PALACIOS, Eduardo, 41015 Sevilla (ES); HERRUZO GARCIA, Juan Carlos, 41015 Sevilla (ES); VALVERDE GARCIA, Juan S., 41015 Sevilla (ES)
(74) Representative: Carlos Hernando, Borja
(86) International application number: PCT/ES2021/070485
(87) International publication number: WO 2022/003230

(56) References cited:
- WO-A1-2018/208153
- US-A1- 2002 077 733
- US-A1- 2017 080 960
- US-A1- 2018 222 504
- US-A1- 2018 339 720

## Description

The present invention corresponds to the technical field of rail measuring systems, in particular to a rail inspection system onboard the vehicle itself and to the techniques for measuring the geometry of the rail, wherein said rail inspection system also has means for measuring the wear and corrugation of the rail.

### Background of the invention

Nowadays, in railway operations in which the number of passengers has increased but the operating and maintenance costs must be reduced it is necessary to carry out a series of controls of the rail values, both those related to its geometry and to its wear and corrugation, which allow a more efficient and economical maintenance of the infrastructure.

In the state of the art, railway track auscultation systems can accomplish defect detection, that may exist in the railroad tracks, with respect to the optimal rail values. This allows to reduce maintenance costs as well as to reduce the probability of train accidents due to rail geometry values above the recommended limits.

The aim of these systems is to measure the rail and compare the values of the measured quantities with those established by the regulations as safe limits.

The most basic devices used for this purpose consist of auscultation systems mounted on a frame that is propelled along the rail, so that it can be moved as it travels along the rail, while taking the measurements of the magnitudes of interest. However, the most sophisticated devices for this purpose are, on the one hand, the trains instrumented to perform such auscultation and, on the other hand, onboard auscultation systems on the rail vehicles themselves.

Examples of current state of the art are the following reference documents ES 1062827, ES2605796, US20180339720, PL399174, RU2652338, CN108466635, and US20110181721.

Reference document ES1062827 proposes a rail auscultation device comprising a T-shaped frame on which the auscultation means are arranged and which has at each end of the frame a respective leg of predetermined length with a wheel suitable for running on the rails of a railroad track.

This system corresponds to the first type mentioned, the purpose of which is to measure the characteristics of the rail by means of an element made exclusively for this purpose, different from a rail vehicle. These systems mounted on a frame, although they are more economical and the results obtained with them have a high level of accuracy, nevertheless have certain disadvantages due, on the one hand, to the fact that they are very slow systems in obtaining such data and, on the other hand, that since the measurement is performed on a frame designed for this purpose, the values that it will obtain are those relating to the geometry, wear and corrugation of the rail when passing the frame over it, but they will not correspond to those that the rail will present during the passage of a commercial vehicle, the dimensions and weight of which are different from those of the frame.

Since the regulations themselves recommend that measurements be taken with the rail loaded, new measurement systems have appeared, built as instrumented auscultation vehicles specifically designed to move along the rail and take the corresponding measurements, as in the case of reference document ES2605796. This type of device also has a number of disadvantages, such as the fact that they are much more expensive than the measurement systems on a frame and also, the dynamics obtained from the measurement of the rails, again will not correspond to that presented during the passage of a rail vehicle, because the conditions of both vehicles, commercial and instrumented, are not the same.

In order to solve these problems, onboard systems appear, such as those presented in reference documents US20180339720, PL399174, RU2652338, CN108466635 and US20110181721. These systems are installed directly on the underside of a commercial rail vehicle, so that the rail measurements obtained with them do correspond to the values that the rail will present when a commercial vehicle passes, since they are obtained under similar calculation conditions.

However, the latter systems still have several disadvantages because they only monitor the state of the rail and not the kinematic state of the vehicle. In addition, the sensors that can be used under these conditions do not have the degree of accuracy that sensors used on measuring frames, and have a very large drift with respect to them.

Most of these systems use the well-known rope method for the calculation of alignment and leveling, in which very long beams are needed, of the order of 15 m, to measure three points far away from each other, which makes it impossible to install them in any train, since it is required that they present dimensions such as to allow these measurements, light trains being discarded.

Other onboard systems use inertial sensors, which allow a greater compactness, but they are sensors that present many errors that also accumulate over time, so in order to try to reduce them, they combine them with the rope method, so the same problem still exists.

No auscultation system has been found in the state of the art, specifically an onboard system, in which it is possible to measure the characteristics of the rail and the vehicle, so that the values do correspond to the real values of rail vehicles, and which can be installed in any type of commercial vehicle, both large and small, while maintaining acceptable levels of accuracy, and that is a compact and accurate system.

### Description of the invention

The onboard rail auscultation system disclosed herein comprises means of measuring the geometry, with at least one odometry device and at least one inertial measurement unit (including accelerometer, gyroscope and magnetometer), wear measuring means and rail corrugation measuring means.

In this onboard auscultation system, the means of measuring the geometry comprise an auscultation computer with a microcontroller and an FPGA connected to it, both located inside an electronic box arranged in the vehicle.

Likewise, said means of measuring the geometry comprise a first machine vision device and an electronic control device, with a user actuation interface, connected to the auscultation computer by means of connection means.

The first machine vision device is arranged on the underside of the vehicle outside the rails. It further comprises two measurement units each associated with one of the rails respectively, wherein each measurement unit comprises at least one video camera with visual access of at least the outer side of the rail and a linear projection laser. Each camera is connected to the FPGA of the electronics box, for efficient processing of the acquired images.

In turn, at least one inertial measurement unit and an odometry device are connected to the microcontroller.

According to another aspect, the auscultation computer comprises a software with an automated actuation procedure implemented therein, for storage, processing and combination of the information received and transmission of the data.

In turn, a rail auscultation procedure is proposed in this report, using the means of measuring the geometry of an onboard rail auscultation system, as previously defined, comprising the phases indicated below.

Thus, it comprises a first phase of switching on the auscultation computer and the electronic control device, as well as self-calibration of the sensors used, followed by a second phase of data measurement request and activation of the system sensors consisting of at least one odometry device, at least one inertial measurement unit and a first artificial vision device with a measurement unit, associated to each rail.

A third phase consists of processing the data obtained by said sensors by means of the algorithm enabled in the auscultation computer. This third processing phase comprises a series of calculation stages.

Thus, the first stage of this third phase of data processing is to obtain a kinematic simulation of the vehicle by combining the known values of the projected geometry of the rail with the values obtained by the odometry device.

This is followed by a second stage of obtaining a corrected longitudinal position of the vehicle on the rail by combining this kinematic simulation with the values obtained in the at least one inertial measurement unit, where the values obtained are formed at least by the value of the angular velocity of the vehicle with respect to the vertical axis.

A third step consists in obtaining orientation correction values by combining said kinematic simulation with the corrected longitudinal position, and finally a fourth stage consists of obtaining the geometrical values of the irregular rail by combining the values of the orientation correction with the inertial measurements of at least one inertial measurement unit and with the data obtained by the measurement units of the first machine vision device.

This third stage of data processing is carried out repeatedly as many times as necessary to obtain the values corresponding to the entire length of rail required with the appropriate accuracy. The four stages are to be applied in a staggered manner, incrementally improving the quality of the results obtained.

The procedure presents a fourth stage of successive sending of the processed data to the electronic control device. This electronic control device has a user interface through which the technician can control the collected data and visualize images from the cameras, data graphs, etc., as well as calculate the vehicle kinematics.

With the onboard rail auscultation system, and the geometric auscultation procedure of the rails by the means of measuring the geometry of an auscultation system as the one defined in this memory and herein proposed, a significant improvement of the state of the art is obtained.

This is because a rail auscultation system is obtained, arranged in an onboard form on a rail vehicle, which can be used to characterize and monitor the geometrical quality of the rail (rail gauge, cant, leveling and alignment) by means of a small number of geometrical parameters without the need to use dynamical parameters of stiffness, damping or inertia of the system.

This system can be coupled to any vehicle component, non-rotating axle, bogie or car, and can be installed in rail vehicles with reduced available space, such as light metros or similar, or with ample available space, such as conventional metros or similar, without any limitation in this sense, i.e., the dimensions of the rail vehicle do not represent a restriction for the installation of this system.

With this system and auscultation procedure, it is possible to solve the current problem of lack of periodic measurements in the industry, since it is possible to take measurements continuously while the vehicle is moving.

In addition, it does not require a multitude of parameters, nor expensive high-tech sensors to obtain the rail geometry accurately, since the measurement by means of a series of specific sensors and the application of an algorithm enabled in the system's software, allows for the convenient combination of the information provided by each one of these sensors to obtain the necessary data.

With the signals received from each sensor, the signals are processed live, allowing to know the status of the vehicle and its environment. In addition, this information is also sent live to the customer's electronic control device for visualization of the collected data.

The auscultation computer is the centerpiece of the system, being responsible for the control of the auscultation, as well as for sending the data to the client's electronic device.

With the auscultation procedure herein proposed, it is not necessary to know the stiffness, damping or inertias of the system to be measured. In this case, a reference kinematics of the vehicle is used from the rail geometry measurements to improve the calculation of the vehicle's orientation in space. On the other hand, the inertial measurements, in particular that of the gyroscope, are used for the correction of the odometry.

It is therefore a very efficient system and procedure, allowing the auscultation of the rail and the calculation of the rail geometry, in particular by means of compact, onboard means, applicable in any type of rail vehicle and with a degree of accuracy higher than the previous on-board equipment because of the processing of the values obtained from the sensors by the algorithm enabled in the system's software.

### Brief description of the drawings

In order to assist in a better understanding of the features of the invention, in accordance with an example of a practical embodiment of it, a series of drawings is provided in an illustrative and non-limiting manner, wherein the following has been represented:
Figure 1.- Shows a schematic view of the connections of the onboard rail auscultation system, for a preferred embodiment of the invention.
Figure 2.- Shows a schematic view of the processing phase of the rail auscultation procedure and its stages, for a preferred embodiment of the invention.
Figure 3.- Shows a schematic of the vision devices of the onboard rail auscultation system, for a preferred embodiment of the invention.

### Detailed description of a preferred embodiment of the invention

In view of the figures provided, it can be seen how, in a preferred embodiment of the invention, the onboard rail auscultation system herein proposed is made up of means for measuring rail wear, means for measuring rail corrugation and means for measuring rail geometry, wherein the latter comprise at least one odometry device (E1) and at least one inertial measurement unit (E2) consisting of an accelerometer, a gyroscope and a magnetometer.

For a better understanding of the Figures, each equipment, device, sensor or similar that is part of the system will be designated by an E, each set or module that includes more than one element, by a G, the types of media, by a C and the phases of the procedure by a P.

In this onboard auscultation system the novelty is focused on these means of measuring the geometry.

Thus, in the system thus formed, the means of measuring the geometry comprise an auscultation computer (E3) with a microcontroller (E4) and an FPGA (E9) connected thereto, both located inside an electronic box (G4) arranged in the vehicle.

These means of measuring the geometry of this auscultation system also comprise a first artificial vision device (E5) arranged on the lower part of the vehicle and consisting of two measurement units (E5.1, E5.2) each associated with one of the rails of the track respectively.

Each measurement unit (E5.1, E5.2) of the first vision device (E5) comprises at least one video camera (E5.1.a, E5.2.a) with visual access to at least the outer side of the corresponding rail and a linear projection laser (E5.1.b, E5.2.b). Each camera is connected to the FPGA (E9) of the electronics box, for efficient processing of the acquired images.

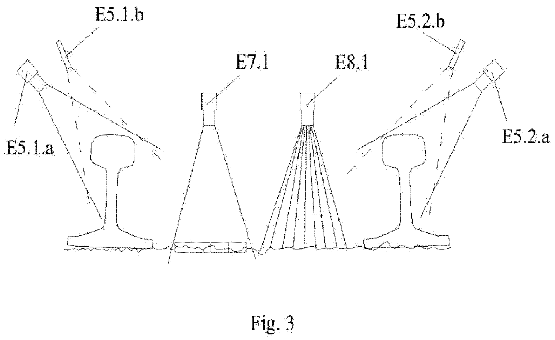

Thus, as shown in Figure 3, the projection laser (E5.1.b, E5.2.b) of each measurement unit (E5.1, E5.2) of the first vision device (E5) is arranged such that it perfectly illuminates the profile of the corresponding rail of the rail to be reconstructed, so that the video camera (E5.1.a, E5.2.a) associated with said rail can perfectly capture the same. The application of the automated actuation procedure of the system auscultation computer software (E3) allows the 3D reconstruction of the rail to know the position of each of the points that make up its profile.

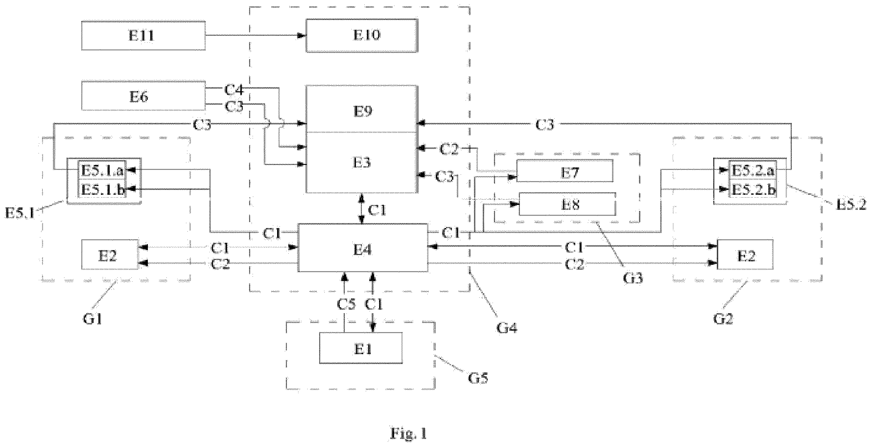

As shown in Figure 1, the at least inertial measurement unit (E2) is connected to the microcontroller (E4) with a digital communication, which in this embodiment is formed by a serial port (C2), while the at least one odometry device (E1) is likewise connected to the microcontroller (E4). In this embodiment, the system comprises an odometry device (E1) and two inertial measurement units (E2), each one associated to a rail.

In this case, this said odometry device (E1) is formed by at least one magnetic sensor connected to the microcontroller (E4) by means of a data transmission connection (C5) and magnets coupled to the vehicle wheels for measuring the instantaneous angular velocity of the same.

In other embodiments, the odometry device (E1) may consist of a tachogenerator, a rotary encoder, a magnetic field detector that measures the presence of magnets previously installed in known positions on the wheel, or a similar device.

For its part, the microcontroller (E4) is responsible for synchronizing (C1) the inertial sensors of the two inertial measurement units (E2) of this system, of the odometry device (E1) and of the measurement units (E5.1, E5. 2) of the first vision device (E5) and is in turn connected to the auscultation computer (E3), whose software, with an actuation algorithm enabled in it, allows the storage, processing and combination of the information received, as well as the transmission of the data.

On the other hand, the means of measuring the geometry of this auscultation system comprise an electronic control device (E6), with a user actuation interface, connected to the auscultation computer (E3) by means of connection means. Said electronic control device (E6) makes it possible to control the auscultation, visualize camera images or data graphs, and calculate the dynamics of the equipment.

In this preferred embodiment of the invention, the means of measuring the geometry comprise a second vision device (E7) consisting of a camera or event camera (E7.1), for obtaining the longitudinal and lateral displacement of the vehicle by searching for patterns in the image, which are matched between successive images, this camera being arranged focusing on the ground and, connected to the auscultation computer (E3), by means of a serial port (C2).

This second vision device (E7) allows to obtain signals in longitudinal and lateral positions, measured directly by artificial vision methods. For this purpose, a series of consecutive photographs are taken which allow, through the detection of some characteristics of each photograph taken and by matching these characteristics between the photographs taken, to appreciate between one image and the next, what has been the lateral and longitudinal displacement of the vehicle with respect to the rail.

Moreover, in this preferred embodiment of the invention, the camera (E7.1) of the second vision device (E7) for obtaining the longitudinal and lateral displacement of the vehicle, is further connected to the microcontroller (E4) for precise hardware synchronization. In this way, it is possible the synchronization (C1) of the acquisition of these images with the acquisition of data from the rest of the sensors.

Likewise, at least one video camera (E5.1.a, E5.2.a) of each measurement unit (E5.1, E5.2) of the first artificial vision device (E5) is connected to the auscultation computer (E3) and to the microcontroller (E4), for the same purpose of synchronization of the data obtained therefrom. In some cases, the auscultation computer (E3) may be responsible for both image processing and image storage, however, in this preferred embodiment of the invention, as shown in Figure 1, the at least one video camera (E5.1.a, E5.2.a) of each measurement unit (E5.1, E5.2) of the first artificial vision device (E5) is connected to an FPGA (E9) of the system, which in this case is in charge of the processing of the images that are subsequently stored by the auscultation computer (E3). Said connection to the FPGA (E9) is in this case an Ethernet channel connection (C3), but in other embodiments it may be a PCI connection.

In this preferred embodiment, the means of measuring the geometry comprise a third vision device (E8) consisting of a depth camera (E8.1) for measurement of the vehicle roll angle and vertical displacement, connected to the auscultation computer (E3), via a wired internet connection or Ethernet channel (C3). In this case said third vision device (E8) is also connected to the microcontroller, for a synchronization (C1) of the imaging acquisition with the data from the rest of the sensors.

By means of this third vision device (E8), it is possible to improve the obtained position and orientation data compared to the values collected by the two inertial measurement units (E2). The objective of this camera (E8.1) is the measurement of the relative orientation of the vehicle relative to the rail and the vertical displacement of the vehicle, not being possible to obtain these data from the second vision device (E7).

According to another aspect, in this preferred embodiment of the invention, each measurement unit (E5.1, E5.2) of the first vision device (E5) is arranged in a first and second modules (G1, G2) closed and watertight respectively. Likewise, in this case the second vision device (E7) and the third vision device (E8) are both arranged inside a third module (G3) which is also closed and watertight. In other embodiments they may each be arranged in the first and second closed modules (G1, G2), together with the laser and at least one video camera of a measurement unit (E5.1, E5.2) of the first vision device (E5) respectively, or even both together in one of said first or second modules (G1, G2).

On the other hand, as shown in Figure 1, in this preferred embodiment, the system comprises an additional closed and watertight module (G5) located on the lower part of the vehicle toward the outside, inside which the odometry device (E1) is located. The inertial measurement units (E2) in this embodiment are each arranged in the first and second modules (G1, G2) respectively, next to a measurement unit (E5.1, E5.2) of the first device (E5). In other embodiments, it may be that the second vision device (E7) and/or the third vision device (E8) are also arranged in this additional enclosed module (G5) next to the odometry device (E1), even the inertial measurement units (E2) may also be arranged in this additional module (G5). It may also be the case that any of said second and/or third vision device (E7, E8) are located in at least one of the first and second enclosed modules (G1, G2) in which a laser (E5.1.b, E5.2.b) and the at least one video camera (E5.1.a, E5.2.a) of a measurement unit (E5.1, E5.2.) of the first vision device (E5) are located.

Any of the first, second and third enclosed modules (G1, G2, G3) and the additional enclosed module (G5) must meet requirements in terms of sealing and protection of the electronics and sensors inside, against soiling or impact from any small body which, in the course of the journey, may change the relative position of the components to each other or alter the operation of the components. In order to achieve this without impairing the visibility of the camera of either of the first, second and third vision devices and the laser, protective covers composed of 1 mm steel plate are fitted, welded to the camera assembly, and there is also a methacrylate plate that allows image capture and laser emission. The cables of these elements are inserted inside the square and rectangular profiles so that they are protected.

In this preferred embodiment, the means of connecting the electronic control device (E6) with the auscultation computer (E3) consist of a wireless network via Wi-Fi (C4). In this case, it also has a wired connection via an Ethernet channel (C3), for greater security in the event of a possible failure of the wireless network. In other embodiments, it may have only one of these types of means of connection, either via wireless network or via Ethernet.

The different equipment forming part of the geometry measurement system must have a certain power supply according to their physical characteristics in order to have a certain power available to properly operate. This power is supplied by a global power system (E10), which is responsible for distributing the general power supply among all the equipment as appropriate and may or may not have an uninterruptible power supply system that prevents voltage drops in the event of unstable input power. This input power is supplied to the overall power system (E10) via mains (E11) in this case, but in other embodiments it may be supplied via batteries.

A rail auscultation procedure is also proposed in this specification, by means of an onboard rail auscultation system as defined above.

This procedure comprises a first phase of switching on the auscultation computer (E3) and the electronic control device (E6), as well as the self-calibration of the sensors used and a second phase of data measurement request and activation of the sensors of the system formed by at least one odometry device (E1), at least one inertial measurement unit (E2) and, associated to each rail, a measurement unit (E5.1, E5.2) of a first artificial vision device (E5), consisting of a laser (E5.1.b., E5.2.b.) and at least one video camera (E5.1.a, E5.2.a). As previously mentioned, the system proposed herein features an odometry device (E1) and two inertial measurement units (E2).

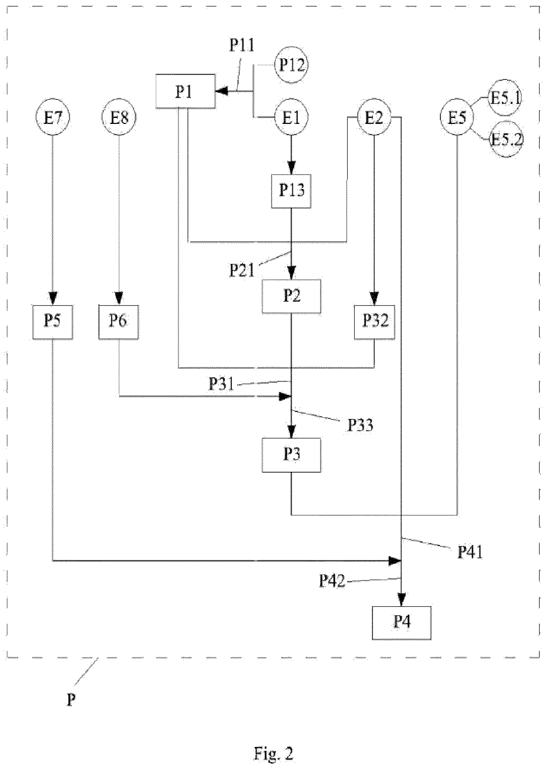

Then, a third phase is carried out, consisting of the processing (P) of the data obtained by means of these sensors by means of the algorithm enabled in the software of the auscultation computer (E3). This third phase, represented in Figure 2, comprises the execution steps that are determined below.

Thus, the first step consists of obtaining a kinematic simulation (P1) of the vehicle by means of a first combination (P11) of the known values of the projected geometry (P12) of the rail with the values obtained by the odometry device (E1).

The values obtained from the odometry device (E1) alone are inaccurate, because for their calculation certain assumptions are made which are not entirely accurate, leading to an accumulation of errors in space. This accumulated error is unacceptable and an adjustment of the odometry (P13) must be made to improve its accuracy, by means of the information collected from another set of sensors.

Thus, the second step is to obtain a corrected longitudinal position (P2) of the vehicle on the rail by a second combination (P21) of the kinematic simulation (P1) with the values obtained in the two inertial measurement units (E2) of this system, and an adjustment of the odometry (P13) from the values of the odometry device (E1), wherein said obtained values are formed at least by the value of the angular velocity of the vehicle with respect to the vertical axis.

Traditionally, the use of the inertial measurement units (E2) is used to obtain the vehicle orientation, but in this procedure it is possible to use them to improve the positioning of the vehicle on the rail, because by combining the values obtained in at least one inertial measurement unit (E2), with the kinematic simulation (P1), an odometry adjustment is performed to obtain the corrected longitudinal position of the vehicle (P2).

The third stage consists of obtaining the orientation correction values (P3) by means of a third combination (P31) in this case, of the kinematic simulation (P1) which gives information of the reference orientation and kinematics of the vehicle, with the corrected longitudinal position (P2). An uncorrected vehicle orientation (P32) obtained from the measurements of the inertial measurement unit (E2) is also combined in this case.

Finally, a fourth stage consists of obtaining the geometric values (P4) of the irregular rail by means of a fourth combination (P41) of the orientation correction values (P3) with the inertial measurements of the two inertial measurement units (E2) and with the data obtained by the measurement units (E5.1, E5.2) of the first artificial vision device (E5).

It can thus be seen that an integral use is made of all the data collected to improve the results obtained at each step.

The procedure presents a fourth step consisting of the successive sending of the processed data to the electronic control device (E6).

In this embodiment, as previously indicated, the means for measuring the geometry of the onboard auscultation system comprise a second vision device (E7) for obtaining the longitudinal and lateral displacement (P5) by means of comparison between successive images of these values of longitudinal and lateral displacement of the rail vehicle.

In addition, the fourth stage consisting of obtaining the geometrical values (P4) of the irregular rail comprises the additional combination (P42) of these values of the longitudinal and lateral displacement of the rail vehicle.

Likewise, in this preferred embodiment of the invention, the means of measuring the geometry of the onboard auscultation system comprise a third vision device (E8). Thereby, the third stage of data processing (P) comprises an additional step of acquisition of the vehicle vertical position and warpage values (P6).

Therewith, the third stage of obtaining the values of correction of the orientation (P3) comprises the additional combination (P33) of these vertical position and warp values of the vehicle.

The described embodiment constitutes only an example of the present invention, therefore, the specific details, terms and phrases used in this specification are not to be considered as limiting, but are to be understood solely as a basis for the claims and as a representative basis for providing a description understandable as well as sufficient information to the person skilled in the art to apply the present invention.

## Claims

1. Rail inspection procedure, comprising:
- Providing at least one rail inspection system on board a vehicle, comprising means of measuring the geometry of the rails, which means have at least one odometry device (E1), and at least one inertial measurement unit (E2) consisting of an accelerometer, a gyroscope and a magnetometer, means for measuring wear and means for measuring rail corrugation,
• an inspection computer (E3) and a microcontroller (E4) connected thereto, the inspection computer (E3) being for applying an algorithm enabled in software of the inspection computer (E3), both located inside an electronic box (G4) for housing electronics, located in the vehicle;
• a first artificial vision device (E5) placed in the lower part of the vehicle and consisting of two measurement units (E5.1, E5.2) each of which is associated with one of the rails respectively, wherein each measurement unit comprises at least one video camera (E5.1.a, E5.2.a) with visual access to at least the outer side of the rail and a laser (E5.1.b, E5.2.b) for linear projection;
• an electronic control device (E6), with a user actuation interface for user operation, connected to the inspection computer (E3) by means of connecting means; and
• an FPGA for image processing connected to the inspection computer, and connected to at least one video camera (E5.1.a, E5.2.a) of each measurement unit (E5.1, E5.2) of the first artificial vision device (E5);
• wherein the at least one inertial measurement unit (E2) and the odometry device (E1) are connected to the microcontroller (E4) and wherein said inspection computer (E3) comprises a software with an automated actuation procedure implemented therein for storing, processing and combining the received information and transmitting the data,
the procedure further comprising:
- switching on of the inspection computer (E3) and the electronic control device (E6) and self-calibration of system sensors, including the odometry device (E1), the at least one inertial measurement unit (E2), and the measurement units of the first artificial vision device (E5) associated to each rail;
- requesting data measurement and activating the system sensors;
- processing (P) of the data obtained from the system sensors by applying the algorithm enabled in the inspection computer software (E3), by using reference kinematics of the vehicle from known values of the projected rail geometry,
comprising the phases:
• obtaining a kinematic simulation (P1) of the vehicle by means of a first combination (P11) of the known values of the projected geometry (P12) of the rail with values obtained by the odometry device (E1);
• obtaining a corrected longitudinal position (P2) of the vehicle on the rail, adjusting the odometry, by means of a second combination (P21) of said kinematic simulation (P1) with values obtained by the inertial measurement unit (E2), wherein said obtained values are formed at least by the value of the angular velocity of the vehicle with respect to the vertical axis,
• obtaining orientation correction values (P3) by means of a third combination (P31) of said kinematic simulation (P1) with the corrected longitudinal position (P2), and
• obtaining geometrical values (P4) of an irregular rail by a fourth combination (P41) of the values of the orientation correction (P3), with the inertial measurements of the at least one inertial measurement unit (E2) and with the data obtained by the first artificial vision device (E5), and
- successive sending of processed data to the electronic control device (E6).

2. Rail inspection procedure according to claim 1, **characterized in that** the means for measuring the geometry of the inspection system onboard comprise a second vision device (E7) for obtaining the longitudinal and lateral displacement (P5) of the rail inspection system, and a third data processing phase (P) comprises obtaining, by means of a comparison between successive images obtained by the second vision device (E7), values (P42) of longitudinal and lateral displacement (P5) of the rail inspection system of the vehicle, and, wherein the last stage of obtaining the geometrical values (P4) of the irregular rail further comprises an additional combination of the results of the fourth combination (P41) with said values of longitudinal and lateral displacements (P5).

3. Rail inspection procedure according to any of the claims 1 and 2, **characterized in that** the means for measuring the geometry of the inspection system onboard comprise a third vision device (E8), and the third data processing stage (P) comprises an additional step of obtaining the vertical position and roll values (P6) of the vehicle prior to a step of obtaining orientation correction values (P3), wherein this step of obtaining the orientation correction values (P3) also comprises an additional combination of these values (P33).

4. On-board rail inspection system, configured to carry out the procedure of claim 1, wherein the system comprises means of measuring the geometry, which have at least one odometry device (E1), and at least one inertial measurement unit (E2) consisting of an accelerometer, a gyroscope and a magnetometer, means for measuring wear and means for measuring rail corrugation, said means of measuring the geometry comprise:
- an inspection computer (E3) for applying an algorithm enabled in software of the inspection computer and a microcontroller (E4) connected thereto, both located inside an electronic box (G4) located in the vehicle;
- a first artificial vision device (E5) placed in the lower part of the vehicle and consisting of two measurement units (E5.1, E5.2) each of which is associated with one of the rails respectively, wherein each measurement unit comprises at least one video camera (E5.1.a, E5.2.a) with visual access to at least the outer side of the rail and a laser (E5.1.b, E5.2.b) for linear projection and;
- an electronic control device (E6), with a user actuation interface for user operation, connected to the inspection computer (E3) by means of connecting means;
- an FPGA for image processing connected to the computer and to at least one video camera (E5.1.a, E5.2.a) of each measurement unit (E5.1, E5.2) of the first artificial vision device (E5);
wherein the at least one inertial measurement unit (E2) and the odometry device (E1) are connected to the microcontroller (E4).

5. Onboard rail inspection system according to claim 4, **characterized in that** the means for measuring the geometry comprise a second vision device (E7) consisting of a camera or event camera (E7.1) for obtaining the longitudinal and lateral displacement of the vehicle by searching for patterns in the image, patterns which are matched between successive images, where the camera is positioned facing the ground and connected to the auscultation computer (E3).

6. Onboard rail inspection system according to claim 5, **characterized in that** the camera (E7.1) of the second vision device (E7) for obtaining the longitudinal and lateral displacement of the vehicle, is also connected to the microcontroller (E4) for precise hardware synchronization.

7. On-board rail inspection system, according to any of the preceding claims 4 to 6, **characterized in that** the means of measuring the geometry comprise a third vision device (E8), consisting of a depth camera (E8.1), connected to the auscultation computer (E3), for measurement of the vehicle's roll angle and vertical displacement.

8. Onboard rail inspection system, according to any one of the preceding claims 4 to 7, **characterized in that** each measurement unit (E5.1, E5.2) of the first vision device (E5) is arranged in a first and second modules (G1, G2) which are closed and watertight.

9. Onboard rail inspection system, according to claim 8, **characterized in that** a second viewing device (E7) and/or the third viewing device (E8) are arranged inside the first and/or the second enclosed modules (G1, G2), together with a first artificial vision device (E5).

10. Onboard rail inspection system, according to any one of claims 8 or 9,
**characterized in that** the odometry device (E1) and/or at least one inertial measurement unit (E2) are arranged inside the first and/or second closed modules (G1, G2), at least next to a first artificial vision device (E5).

11. Onboard rail inspection system, according to any of the preceding claims 4 to 10,
**characterized in that** it comprises an additional enclosed and watertight module (G5), located on the underside of the vehicle external part, inside which is arranged the odometry device (E1) and/or at least one inertial measurement unit (E2) and/or the second vision device (E7) and/or the third vision device (E8).

12. Onboard rail inspection system, according to any one of the preceding claims 4 to 11, **characterized in that** at least one video camera (E5.1.a, E5.2.a) of each measurement unit (E5.1, E5.2) of the first artificial vision device (E5) is connected to the auscultation computer (E3) and the microcontroller (E4).

13. Onboard rail inspection system, according to any one of the preceding claims 4 to 12, **characterized in that** the at least one video camera (E5.1.a, E5.2.a) of each measurement unit (E5.1, E5.2) of the first artificial vision device (E5) is connected to an FPGA (E9) for image processing.

14. Onboard rail inspection system, according to any one of the preceding claims 4 to 13, **characterized in that** the odometry device (E1) consists of at least one magnetic sensor connected to the microcontroller (E4) by means of a data transmission connection (C5) and magnets coupled to the vehicle wheels for measuring the instantaneous angular velocity of the vehicle wheels.

15. Onboard rail inspection system, according to any of the preceding claims 4 to 14
**characterized in that** the means of connection of the electronic control device (E6) with the auscultation computer (E3) are formed by a wireless network via Wi-Fi (C4).

## Patentansprüche

1. Schieneninspektionsverfahren, umfassend:
Bereitstellen mindestens eines Schieneninspektionssystems an Bord eines Fahrzeugs, umfassend Mittel zum Messen der Geometrie der Schienen, wobei diese Mittel mindestens eine Wegmessvorrichtung (E1) und mindestens eine Trägheitsmesseinheit (E2), bestehend aus einem Beschleunigungsmesser, einem Gyroskop und einem Magnetometer, Mittel zum Messen des Verschleißes und Mittel zum Messen der Schienenriffelung aufweisen,
• einen Inspektionsrechner (E3) und einen damit verbundenen Mikrocontroller (E4), wobei der Inspektionsrechner (E3) zum Anwenden eines in der Software des Inspektionsrechners (E3) aktivierten Algorithmus dient, die sich beide innerhalb einer Elektronikbox (G4) zum Aufnehmen von Elektronik befinden, die sich in dem Fahrzeug befindet;
• eine erste Artificial-Vision-Vorrichtung (E5), die im unteren Teil des Fahrzeugs platziert ist und aus zwei Messeinheiten (E5.1, E5.2) besteht, von denen jede jeweils einer der Schienen zugeordnet ist, wobei jede Messeinheit mindestens eine Videokamera (E5.1.a, E5.2.a) mit visuellem Zugang zu mindestens der Außenseite der Schiene und einen Laser (E5.1.b, E5.2.b) für die lineare Projektion umfasst;
• eine elektronische Steuervorrichtung (E6) mit einer Benutzerbetätigungsschnittstelle zur Bedienung durch den Benutzer, die über Verbindungsmittel mit dem Inspektionsrechner (E3) verbunden ist; und
• ein FPGA zur Bildverarbeitung, das mit dem Inspektionsrechner verbunden ist und mit mindestens einer Videokamera (E5.1.a, E5.2.a) jeder Messeinheit (E5.1, E5.2) der ersten Artificial-Vision-Vorrichtung (E5) verbunden ist;
• wobei die mindestens eine Trägheitsmesseinheit (E2) und die Wegmessvorrichtung (E1) mit dem Mikrocontroller (E4) verbunden sind und wobei der Inspektionsrechner (E3) eine Software mit einem darin implementierten automatisierten Betätigungsverfahren zum Speichern, Verarbeiten und Kombinieren der empfangenen Informationen und Übertragen der Daten umfasst,
wobei das Verfahren ferner Folgendes umfasst:
- Einschalten des Inspektionsrechners (E3) und der elektronischen Steuervorrichtung (E6) und Selbstkalibrierung der Systemsensoren, einschließlich der Wegmessvorrichtung (E1), der mindestens einen Trägheitsmesseinheit (E2) und der Messeinheiten der ersten Artificial-Vision-Vorrichtung (E5), die jeder Schiene zugeordnet sind;
- Anfordern von Datenmessung und Aktivieren der Systemsensoren;
- Verarbeiten (P) der von den Systemsensoren erhaltenen Daten durch Anwenden des in der Inspektionsrechner-Software (E3) aktivierten Algorithmus unter Verwendung der Referenzkinematik des Fahrzeugs anhand bekannter Werte der projizierten Schienengeometrie,
umfassend die Phasen:
• Erhalten einer kinematischen Simulation (P1) des Fahrzeugs mittels einer ersten Kombination (P11) der bekannten Werte der projizierten Geometrie (P12) der Schiene mit Werten, die von der Wegmessvorrichtung (E1) erhalten werden;
• Erhalten einer korrigierten Längsposition (P2) des Fahrzeugs auf der Schiene, Anpassen der Wegmessung mittels einer zweiten Kombination (P21) der kinematischen Simulation (P1) mit Werten, die von der Trägheitsmesseinheit (E2) erhalten werden, wobei die erhaltenen Werte mindestens durch den Wert der Winkelgeschwindigkeit des Fahrzeugs in Bezug auf die Vertikalachse gebildet werden,
• Erhalten von Orientierungskorrekturwerten (P3) mittels einer dritten Kombination (P31) der kinematischen Simulation (P1) mit der korrigierten Längsposition (P2), und
• Erhalten von geometrischen Werten (P4) einer unregelmäßigen Schiene durch eine vierte Kombination (P41) der Werte der Orientierungskorrektur (P3), mit den Trägheitsmessungen der mindestens einen Trägheitsmesseinheit (E2) und mit den von der ersten Artificial-Vision-Vorrichtung (E5) erhaltenen Daten, und
- sukzessives Senden der verarbeiteten Daten an die elektronische Steuervorrichtung (E6).

2. Schieneninspektionsverfahren nach Anspruch 1, **dadurch gekennzeichnet, dass** die Mittel zum Messen der Geometrie des bordeigenen Inspektionssystems eine zweite Vision-Vorrichtung (E7) umfassen, um die Längs- und Querverschiebung (P5) des Schieneninspektionssystems zu erhalten, und dass eine dritte Datenverarbeitungsphase (P) das Erhalten, mittels eines Vergleichs zwischen sukzessiven Bildern, die von der zweiten Vision-Vorrichtung (E7) erhalten werden, von Werten (P42) der Längs- und Querverschiebung (P5) des Schieneninspektionssystems des Fahrzeugs umfasst, und wobei die letzte Stufe des Erhaltens der geometrischen Werte (P4) der unregelmäßigen Schiene ferner eine zusätzliche Kombination der Ergebnisse der vierten Kombination (P41) mit den Werten der Längs- und Querverschiebungen (P5) umfasst.

3. Schieneninspektionsverfahren nach einem der Ansprüche 1 und 2, **dadurch gekennzeichnet, dass** die Mittel zum Messen der Geometrie des bordeigenen Inspektionssystems eine dritte Vision-Vorrichtung (E8) umfassen, und die dritte Datenverarbeitungsstufe (P) einen zusätzlichen Schritt des Erhaltens der Vertikalpositions- und Rollwerte (P6) des Fahrzeugs vor einem Schritt des Erhaltens von Orientierungskorrekturwerten (P3) umfasst, wobei dieser Schritt des Erhaltens der Orientierungskorrekturwerte (P3) auch eine zusätzliche Kombination dieser Werte (P33) umfasst.

4. Bordeigenes Schieneninspektionssystem, das dazu konfiguriert ist, das Verfahren nach Anspruch 1 durchzuführen, wobei das System Mittel zum Messen der Geometrie umfasst, die mindestens eine Wegmessvorrichtung (E1) und mindestens eine Trägheitsmesseinheit (E2), die aus einem Beschleunigungsmesser, einem Gyroskop und einem Magnetometer besteht, Mittel zum Messen des Verschleißes und Mittel zum Messen der Schienenriffelung aufweisen, wobei die Mittel zum Messen der Geometrie Folgendes umfassen:
- einen Inspektionsrechner (E3) zum Anwenden eines in der Software des Inspektionsrechners aktivierten Algorithmus und einen damit verbundenen Mikrocontroller (E4), die sich beide innerhalb einer Elektronikbox (G4) befinden, die sich im Fahrzeug befindet.
- eine erste Artificial-Vision-Vorrichtung (E5), die im unteren Teil des Fahrzeugs platziert ist und aus zwei Messeinheiten (E5.1, E5.2) besteht, von denen jede jeweils einer der Schienen zugeordnet ist, wobei jede Messeinheit mindestens eine Videokamera (E5.1.a, E5.2.a) mit visuellem Zugang zu mindestens der Außenseite der Schiene und einen Laser (E5.1.b, E5.2.b) für die lineare Projektion umfasst; und
- eine elektronische Steuervorrichtung (E6) mit einer Benutzerbetätigungsschnittstelle zur Bedienung durch den Benutzer, die über Verbindungsmittel mit dem Inspektionsrechner (E3) verbunden ist;
- ein FPGA zur Bildverarbeitung, das mit dem Rechner und mit mindestens einer Videokamera (E5.1.a, E5.2.a) jeder Messeinheit (E5.1, E5.2) der ersten Artificial-Vision-Vorrichtung (E5) verbunden ist;
wobei die mindestens eine Trägheitsmesseinheit (E2) und die Wegmessvorrichtung (E1) mit dem Mikrocontroller (E4) verbunden sind.

5. Bordeigenes Schieneninspektionssystem nach Anspruch 4, **dadurch gekennzeichnet, dass** die Mittel zum Messen der Geometrie eine zweite Vision-Vorrichtung (E7) umfassen, die aus einer Kamera oder einer Ereigniskamera (E7.1) besteht, um die Längs- und Querverschiebung des Fahrzeugs durch die Suche nach Mustern im Bild zu erhalten, wobei die Muster zwischen sukzessiven Bildern abgeglichen werden, wobei die Kamera dem Boden zugewandt positioniert und mit dem Prüfrechner (E3) verbunden ist.

6. Bordeigenes Schieneninspektionssystem nach Anspruch 5, **dadurch gekennzeichnet, dass** die Kamera (E7.1) der zweiten Vision-Vorrichtung (E7) zum Erhalten der Längs- und Querverschiebung des Fahrzeugs auch mit dem Mikrocontroller (E4) für eine präzise Hardware-Synchronisation verbunden ist.

7. Bordeigenes Schieneninspektionssystem nach einem der vorhergehenden Ansprüche 4 bis 6, **dadurch gekennzeichnet, dass** die Mittel zum Messen der Geometrie eine dritte Vision-Vorrichtung (E8) umfassen, die aus einer Tiefenkamera (E8.1) besteht und mit dem Prüfrechner (E3) verbunden ist, um den Rollwinkel und die vertikale Verschiebung des Fahrzeugs zu messen.

8. Bordeigenes Schieneninspektionssystem nach einem der vorhergehenden Ansprüche 4 bis 7, **dadurch gekennzeichnet, dass** jede Messeinheit (E5.1, E5.2) der ersten Vision-Vorrichtung (E5) in einem ersten und zweiten Modul (G1, G2) angeordnet ist, die geschlossen und wasserdicht sind.

9. Bordeigenes Schieneninspektionssystem nach Anspruch 8, **dadurch gekennzeichnet, dass** eine zweite Betrachtungsvorrichtung (E7) und/oder die dritte Betrachtungsvorrichtung (E8) zusammen mit einer ersten Artificial-Vision-Vorrichtung (E5) innerhalb des ersten und/oder des zweiten geschlossenen Moduls (G1, G2) angeordnet sind.

10. Bordeigenes Schieneninspektionssystem nach einem der Ansprüche 8 oder 9, **dadurch gekennzeichnet, dass** die Wegmessvorrichtung (E1) und/oder mindestens eine Trägheitsmesseinheit (E2) innerhalb des ersten und/oder zweiten geschlossenen Moduls (G1, G2), mindestens neben einer ersten Artificial-Vision-Vorrichtung (E5), angeordnet sind.

11. Bordeigenes Schieneninspektionssystem nach einem der vorhergehenden Ansprüche 4 bis 10, **dadurch gekennzeichnet, dass** es ein zusätzliches geschlossenes und wasserdichtes Modul (G5) umfasst, das sich an der Unterseite des Fahrzeugaußenteils befindet und in dem die Wegmessvorrichtung (E1) und/oder mindestens eine Trägheitsmesseinheit (E2) und/oder die zweite Vision-Vorrichtung (E7) und/oder die dritte Vision-Vorrichtung (E8) angeordnet ist.

12. Bordeigenes Schieneninspektionssystem nach einem der vorhergehenden Ansprüche 4 bis 11, **dadurch gekennzeichnet, dass** mindestens eine Videokamera (E5.1.a, E5.2.a) jeder Messeinheit (E5.1, E5.2) der ersten Artificial-Vision-Vorrichtung (E5) mit dem Prüfrechner (E3) und dem Mikrocontroller (E4) verbunden ist.

13. Bordeigenes Schieneninspektionssystem nach einem der vorhergehenden Ansprüche 4 bis 12, **dadurch gekennzeichnet, dass** die mindestens eine Videokamera (E5.1.a, E5.2.a) jeder Messeinheit (E5.1, E5.2) der ersten Artificial-Vision-Vorrichtung (E5) mit einem FPGA (E9) zur Bildverarbeitung verbunden ist.

14. Bordeigenes Schieneninspektionssystem nach einem der vorhergehenden Ansprüche 4 bis 13, **dadurch gekennzeichnet, dass** die Wegmessvorrichtung (E1) aus mindestens einem magnetischen Sensor, der über eine Datenübertragungsverbindung (C5) mit dem Mikrocontroller (E4) verbunden ist, und aus mit den Fahrzeugrädern gekoppelten Magneten zum Messen der momentanen Winkelgeschwindigkeit der Fahrzeugräder besteht.

15. Bordeigenes Schieneninspektionssystem nach einem der vorhergehenden Ansprüche 4 bis 14, **dadurch gekennzeichnet, dass** die Mittel zur Verbindung der elektronischen Steuervorrichtung (E6) mit dem Prüfrechner (E3) durch ein drahtloses Netzwerk über Wi-Fi (C4) gebildet werden.

## Revendications

1. Procédé d'inspection de rails, comprenant :
la mise à disposition d'au moins un système d'inspection de rails à bord d'un véhicule, comprenant des moyens de mesure de la géométrie des rails, lesquels moyens comportent au moins un dispositif d'odométrie (E1) et au moins une unité de mesure inertielle (E2) constituée d'un accéléromètre, d'un gyroscope et d'un magnétomètre, des moyens de mesure de l'usure et des moyens de mesure de l'ondulation des rails,
• un ordinateur d'inspection (E3) et un microcontrôleur (E4) qui y est connecté, l'ordinateur d'inspection (E3) étant destiné à appliquer un algorithme activé par logiciel de l'ordinateur d'inspection (E3), tous deux étant situés à l'intérieur d'un boîtier électronique (G4) destiné à loger l'électronique, situé dans le véhicule ;
• un premier dispositif de vision artificielle (E5) placé dans la partie inférieure du véhicule et constitué de deux unités de mesure (E5.1, E5.2) chacune associée respectivement à l'un des rails, dans lequel chaque unité de mesure comprend au moins une caméra vidéo (E5.1.a, E5.2.a) ayant un accès visuel au moins au côté extérieur du rail et un laser (E5.1.b, E5.2.b) pour une projection linéaire ;
• un dispositif de commande électronique (E6), doté d'une interface d'actionnement utilisateur pour l'utilisation par l'utilisateur, connecté à l'ordinateur d'inspection (E3) au moyen de moyens de connexion ; et
• un FPGA pour le traitement d'images connecté à l'ordinateur d'inspection, et connecté à au moins une caméra vidéo (E5.1.a, E5.2.a) de chaque unité de mesure (E5.1, E5.2) du premier dispositif de vision artificielle (E5) ;
• dans lequel l'au moins une unité de mesure inertielle (E2) et le dispositif d'odométrie (E1) sont connectés au microcontrôleur (E4) et dans lequel ledit ordinateur d'inspection (E3) comprend un logiciel dans lequel est mise en œuvre une procédure d'actionnement automatisée pour stocker, traiter et combiner les informations reçues et transmettre les données,
le procédé comprenant en outre :
- la mise sous tension de l'ordinateur d'inspection (E3) et du dispositif de commande électronique (E6) et l'auto-étalonnage des capteurs du système, comprenant le dispositif d'odométrie (E1), l'au moins une unité de mesure inertielle (E2) et les unités de mesure du premier dispositif de vision artificielle (E5) associées à chaque rail ;
- la demande de mesure de données et l'activation des capteurs du système ;
- le traitement (P) des données obtenues à partir des capteurs du système par application de l'algorithme activé dans le logiciel de l'ordinateur d'inspection (E3), en utilisant une cinématique de référence du véhicule à partir de valeurs connues de la géométrie projetée des rails,
comprenant les phases :
• l'obtention d'une simulation cinématique (P1) du véhicule au moyen d'une première combinaison (P11) des valeurs connues de la géométrie projetée (P12) du rail avec des valeurs obtenues par le dispositif d'odométrie (E1) ;
• l'obtention d'une position longitudinale corrigée (P2) du véhicule sur le rail, par ajustement de l'odométrie, au moyen d'une deuxième combinaison (P21) de ladite simulation cinématique (P1) avec des valeurs obtenues par l'unité de mesure inertielle (E2), dans lequel lesdites valeurs obtenues sont formées au moins par la valeur de la vitesse angulaire du véhicule par rapport à l'axe vertical,
• l'obtention de valeurs de correction d'orientation (P3) au moyen d'une troisième combinaison (P31) de ladite simulation cinématique (P1) avec la position longitudinale corrigée (P2), et
• l'obtention de valeurs géométriques (P4) d'un rail irrégulier par une quatrième combinaison (P41) des valeurs de la correction d'orientation (P3) avec les mesures inertielles de l'au moins une unité de mesure inertielle (E2) et avec les données obtenues par le premier dispositif de vision artificielle (E5), et
l'envoi successif des données traitées au dispositif de commande électronique (E6).

2. Procédé d'inspection de rails selon la revendication 1, **caractérisé en ce que** les moyens de mesure de la géométrie du système d'inspection embarqué comprennent un deuxième dispositif de vision (E7) destiné à obtenir le déplacement longitudinal et latéral (P5) du système d'inspection de rails, et **en ce qu'**une troisième phase de traitement de données (P) comprend l'obtention, au moyen d'une comparaison entre des images successives obtenues par le deuxième dispositif de vision (E7), de valeurs (P42) de déplacement longitudinal et latéral (P5) du système d'inspection de rails du véhicule, et **en ce que** la dernière étape d'obtention des valeurs géométriques (P4) du rail irrégulier comprend en outre une combinaison supplémentaire des résultats de la quatrième combinaison (P41) avec lesdites valeurs de déplacements longitudinal et latéral (P5).

3. Procédé d'inspection de rails selon l'une quelconque des revendications 1 et 2, **caractérisé en ce que** les moyens de mesure de la géométrie du système d'inspection embarqué comprennent un troisième dispositif de vision (E8), et **en ce que** la troisième phase de traitement de données (P) comprend une étape supplémentaire d'obtention de la position verticale et des valeurs de roulis (P6) du véhicule avant une étape d'obtention des valeurs de correction d'orientation (P3), dans lequel ladite étape d'obtention des valeurs de correction d'orientation (P3) comprend également une combinaison supplémentaire de ces valeurs (P33).

4. Système d'inspection de rails embarqué, configuré pour mettre en œuvre le procédé selon la revendication 1, dans lequel le système comprend des moyens de mesure de la géométrie, lesquels comportent au moins un dispositif d'odométrie (E1) et au moins une unité de mesure inertielle (E2) constituée d'un accéléromètre, d'un gyroscope et d'un magnétomètre, des moyens de mesure de l'usure et des moyens de mesure de l'ondulation des rails, lesdits moyens de mesure de la géométrie comprenant :
- un ordinateur d'inspection (E3) destiné à appliquer un algorithme activé par logiciel de l'ordinateur d'inspection et un microcontrôleur (E4) qui y est connecté, tous deux étant situés à l'intérieur d'un boîtier électronique (G4) situé dans le véhicule.
- un premier dispositif de vision artificielle (E5) placé dans la partie inférieure du véhicule et constitué de deux unités de mesure (E5.1, E5.2) chacune associée respectivement à l'un des rails, dans lequel chaque unité de mesure comprend au moins une caméra vidéo (E5.1.a, E5.2.a) ayant un accès visuel au moins au côté extérieur du rail et un laser (E5.1.b, E5.2.b) pour une projection linéaire, et ;
- un dispositif de commande électronique (E6), doté d'une interface d'actionnement utilisateur pour l'utilisation par l'utilisateur, connecté à l'ordinateur d'inspection (E3) au moyen de moyens de connexion, et ;
- un FPGA pour le traitement d'images connecté à l'ordinateur et à au moins une caméra vidéo (E5.1.a, E5.2.a) de chaque unité de mesure (E5.1, E5.2) du premier dispositif de vision artificielle (E5) ;
dans lequel l'au moins une unité de mesure inertielle (E2) et le dispositif d'odométrie (E1) sont connectés au microcontrôleur (E4).

5. Système d'inspection de rails embarqué selon la revendication 4, **caractérisé en ce que** les moyens de mesure de la géométrie comprennent un deuxième dispositif de vision (E7) constitué d'une caméra ou d'une caméra événementielle (E7.1) destinée à obtenir le déplacement longitudinal et latéral du véhicule par recherche de motifs dans l'image, motifs qui sont appariés entre des images successives, la caméra étant positionnée face au sol et connectée à l'ordinateur d'auscultation (E3).

6. Système d'inspection de rails embarqué selon la revendication 5, **caractérisé en ce que** la caméra (E7.1) du deuxième dispositif de vision (E7) destinée à obtenir le déplacement longitudinal et latéral du véhicule est également connectée au microcontrôleur (E4) pour une synchronisation matérielle précise.

7. Système d'inspection de rails embarqué selon l'une quelconque des revendications précédentes 4 à 6, **caractérisé en ce que** les moyens de mesure de la géométrie comprennent un troisième dispositif de vision (E8), constitué d'une caméra de profondeur (E8.1), connectée à l'ordinateur d'auscultation (E3), pour la mesure de l'angle de roulis et du déplacement vertical du véhicule.

8. Système d'inspection de rails embarqué selon l'une quelconque des revendications précédentes 4 à 7, **caractérisé en ce que** chaque unité de mesure (E5.1, E5.2) du premier dispositif de vision (E5) est agencée dans un premier et un deuxième modules (G1, G2) qui sont fermés et étanches.

9. Système d'inspection de rails embarqué selon la revendication 8, **caractérisé en ce qu'**un deuxième dispositif de vision (E7) et/ou le troisième dispositif de vision (E8) sont agencés à l'intérieur du premier et/ou du deuxième modules fermés (G1, G2), conjointement avec un premier dispositif de vision artificielle (E5).

10. Système d'inspection de rails embarqué selon l'une quelconque des revendications 8 ou 9, **caractérisé en ce que** le dispositif d'odométrie (E1) et/ou au moins une unité de mesure inertielle (E2) sont agencés à l'intérieur du premier et/ou du deuxième modules fermés (G1, G2), au moins à proximité d'un premier dispositif de vision artificielle (E5).

11. Système d'inspection de rails embarqué selon l'une quelconque des revendications précédentes 4 à 10, **caractérisé en ce qu'**il comprend un module supplémentaire fermé et étanche (G5), situé sur la face inférieure de la partie externe du véhicule, à l'intérieur duquel sont agencés le dispositif d'odométrie (E1) et/ou au moins une unité de mesure inertielle (E2) et/ou le deuxième dispositif de vision (E7) et/ou le troisième dispositif de vision (E8).

12. Système d'inspection de rails embarqué selon l'une quelconque des revendications précédentes 4 à 11, **caractérisé en ce qu'**au moins une caméra vidéo (E5.1.a, E5.2.a) de chaque unité de mesure (E5.1, E5.2) du premier dispositif de vision artificielle (E5) est connectée à l'ordinateur d'auscultation (E3) et au microcontrôleur (E4).

13. Système d'inspection de rails embarqué selon l'une quelconque des revendications précédentes 4 à 12, **caractérisé en ce que** l'au moins une caméra vidéo (E5.1.a, E5.2.a) de chaque unité de mesure (E5.1, E5.2) du premier dispositif de vision artificielle (E5) est connectée à un FPGA (E9) pour le traitement d'images.

14. Système d'inspection de rails embarqué selon l'une quelconque des revendications précédentes 4 à 13, **caractérisé en ce que** le dispositif d'odométrie (E1) est constitué d'au moins un capteur magnétique connecté au microcontrôleur (E4) au moyen d'une liaison de transmission de données (C5) et d'aimants couplés aux roues du véhicule pour mesurer la vitesse angulaire instantanée des roues du véhicule.

15. Système d'inspection de rails embarqué selon l'une quelconque des revendications précédentes 4 à 14, **caractérisé en ce que** les moyens de connexion du dispositif de commande électronique (E6) avec l'ordinateur d'auscultation (E3) sont constitués par un réseau sans fil via Wi-Fi (C4).
